# EUROPÄISCHE PATENTSCHRIFT

(11) **EP 2 195 201 B1**
(45) Veröffentlichungstag und Bekanntmachung des Hinweises auf die Patenterteilung: **02.04.2014**
(21) Anmeldenummer: 08784825.5
(22) Anmeldetag: 17.07.2008
(51) Int. Cl.: B60R 21/20, B60R 21/16

(54) **AIRBAGMODUL MIT OBERFLÄCHENSTRUKTUR**
AIRBAG MODULE HAVING A SURFACE STRUCTURE
MODULE AIRBAG AVEC SURFACE STRUCTURÉE

(30) Priorität: 27.09.2007 DE 102007046211
(43) Veröffentlichungstag der Anmeldung: 16.06.2010
(73) Patentinhaber: GM Global Technology Operations LLC, Detroit, MI 48265-3000 (US)
(72) Erfinder: ULRICH, Rick, 55595 Braunweiler (DE)
(74) Vertreter: Strauss, Peter
(86) Internationale Anmeldenummer: PCT/EP2008/005839
(87) Internationale Veröffentlichungsnummer: WO 2009/043401

(56) Entgegenhaltungen:
- WO-A-2005/077718
- DE-A1- 10 123 352
- DE-A1-102004 018 302
- DE-U1-202004 014 775
- US-A- 3 791 671
- US-A1- 2005 082 800
- US-B1- 6 264 232

## Beschreibung

Die vorliegende Erfindung betrifft ein Airbagmodul nach dem Oberbegriff des Anspruches 3 sowie ein Verfahren zur Handhabung eines Airbagmoduls nach dem Oberbegriff des Anspruchs 1.

Der Gasgenerator eines Airbagmoduls enthält einen im Allgemeinen pyrotechnischen gaserzeugenden Treibstoff, beispielsweise in Form von Gassatztabletten, der nach Zündung durch eine Zündvorrichtung, beispielsweise eine elektrische Funkenerzeugung, ein rasch expandierendes Gas freisetzt, das den Luftsack befüllt und auf diese Weise entfaltet, so dass dieser mit hoher Wucht aus der Airbagaustrittsöffnung austritt.

Insbesondere durch Erwärmung des Airbagmoduls und damit des in dem Gasgenerator enthaltenen Treibstoffes kann es unbeabsichtigt oder gezielt beispielsweise zu Testzwecken, zu einer Zündung des Gasgenerators und damit einem Entfalten des Luftsackes kommen. Beispielsweise wird ein Airbagmodul bei der sogenannten Feuerprüfung ("Bonfire"-Test) gezielt für eine vorgegebene Zeitdauer einem Feuer mit bestimmter Flammtemperatur ausgesetzt.

Liegt dabei das Airbagmodul mit einer Vorderseite, in der die Airbagaustrittsöffnung ausgebildet ist, auf einer Ebene, beispielsweise einem Lagerregal oder einer Testfläche beim Feuerprüfungstest, plan auf, entsteht durch das erzeugte Gas und den sich entfaltenden Luftsack im Inneren des Gehäuses anfänglich ein hoher Druck. Aufgrund der Massenträgheit des über der Airbagaustrittsöffnung liegenden Gehäuses kann dieser Druck sich zu Beginn nicht durch die - zunächst durch die plane Auflage auf der Ebene verschlossene - Airbagaustrittsöffnung unter Entfaltung des Luftsackes abbauen, so dass es zu einer Zerlegung des Gehäuses kommen kann. Die dabei entstehenden Fragmente des Gehäuses, insbesondere der Gasgenerator werden hierbei hoch beschleunigt und stellen eine Gefährdung der Umgebung dar. Dies kann insbesondere zu einer Nicht-Zulassung des Airbagmoduls aufgrund von Sprengstoffgesetzen oder dergleichen führen.

Insbesondere, wenn bei Lagerung des Airbagmoduls auf seiner Vorderseite der Gasgenerator, der in der Regel ein höheres Gewicht aufweist, oberhalb der Airbagaustrittsöffnung angeordnet ist und ein Abheben des Airbagmoduls von der Ebene, das ein Entfalten des Luftsackes und damit einen Abbau des Druckes ermöglichen würde, erschwert, kann es zu einer solchen Zerlegung kommen.

Die DE 20 2004 014 775 U1 schlägt daher eine sogenannte Frühzündeinrichtung vor, die ein kontrolliertes Abbrennen des pyrotechnischen Treibstoffes bewirkt, bevor eine entsprechend heftige Gaserzeugung zu einer Zerlegung des Gehäuses führen kann. Bei plötzlich auftretenden sehr hohen Flammtemperaturen kann es jedoch trotzdem zu einer raschen Gasentwicklung und Druckerzeugung im Gehäuseinneren mit den oben dargestellten Nachteilen kommen. Zusätzlich ist der mehrstufige Aufbau der Zündeinrichtung aufwändig.

Aus der DE 10 2004 018 302 A1 ist ein Airbagmodul mit einem Gehäuse bekannt, dessen Oberteil eine Stufe aufweist. Beispielsweise aus der DE 101 23 352 A1 ist ein Airbagmodul mit einem Gehäuse bekannt, dessen Oberseite gerundet ist. Die US 2005/0082800 A1 zeigt ein Airbagmodulgehäuse mit abstehenden Montageflanschen.

Aufgabe der vorliegenden Erfindung ist es, daher, die Gefahr einer Zerlegung eines auf einer Vorderseite gelagerten Airbagmoduls zu verringern.

Diese Aufgabe wird durch die Merkmale des Anspruches 1 bzw. 3 gelöst. Vorteilhafte Ausführungsformen der Erfindung sind Gegenstand der Unteransprüche.

Ein Airbagmodul nach der vorliegenden Erfindung umfasst einen Luftsack und einen Gasgenerator zum Befüllen des Luftsackes. Der Gasgenerator kann insbesondere einen pyrotechnischen gaserzeugenden Treibstoff umfassen, der beispielsweise elektrisch zündbar ist und nach Zündung ein rasch expandierendes Gas erzeugt, welches den Luftsack befüllt und dabei entfaltet. Im nicht befüllten Zustand ist der Luftsack, vorteilhafterweise gefaltet, in dem Gehäuse aufgenommen. Der Gasgenerator kann ganz oder teilweise in dem Gehäuse aufgenommen oder an diesem befestigt sein. Das Gehäuse ist in einer bevorzugten Ausführung aus Kunststoff und/oder Metall hergestellt.

Es weist eine Vorderseite auf, in der eine Airbagaustrittsöffnung ausgebildet ist. Diese kann beispielsweise im Wesentlichen rechteckförmig oder oval sein oder eine andere Kontur aufweisen.

Erfindungsgemäß weist die Vorderseite des Gehäuses, in der die Airbagaustrittsöffnung ausgebildet ist, eine Oberflächenstruktur auf, die eine plane Auflage der Airbagaustrittsöffnung auf einer Ebene verhindert. Somit wird verhindert, dass sich der Luftsack zunächst nicht durch eine plan auf einer Ebene aufliegende und dadurch im Wesentlichen hermetisch verschlossene Airbagaustrittsöffnung entfalten und so den durch den gezündeten Gasgenerator erzeugten Druck abbauen kann. Dies verringert die Gefahr, dass das Airbagmodul in Folge einer Selbst- oder Fremdzündung des Gasgenerators zerlegt wird, wenn es mit seiner Vorderseite auf einer Ebene gelagert ist.

Bei einer nicht planen Auflage der Airbagaustrittsöffnung ergeben sich zwischen der Vorderseite und einer Ebene, auf der diese gelagert ist, ein oder mehrere Zwischenräume bzw. Spalte, durch die sich der Luftsack entfalten kann. Hierdurch kann nicht nur Druck im Gehäuseinneren abgebaut werden. Zusätzlich kann der sich zwischen Vorderseite und Ebene in dem bzw. den Spalten ausdehnende Luftsack das Airbagmodul aus seiner Lage kippen, so dass die von der Ebene wegkippende Airbagaustrittsöffnung durch diese nicht mehr verschlossen ist und der Luftsack sich freier entfalten kann. Damit kommt es zu einem rascheren Druckabbau im Gehäuseinneren, so dass die Gefahr einer Zerlegung des Gehäuses verringert ist.

Um diesen Effekt zu verstärken, kann die Oberflächenstruktur so ausgebildet sein, dass sie eine kippstabile Lagerung des Airbagmoduls mit seiner Vorderseite auf der Ebene erschwert oder verhindert. Unter einer kippstabilen Lagerung ist dabei eine Lagerung zu verstehen, die einem Verkippen aus einer Lage auf einer horizontalen Ebene einen großen Widerstand entgegensetzt. Während beispielsweise ein auf seiner Vorderseite auf einer horizontalen Ebene aufliegender Würfel, bei dem seine Gewichtskraft senkrecht durch den Flächenschwerpunkt der Vorderseite orientiert ist, einem Verkippen um eine Kante der Vorderseite ein relativ hohes Widerstandsmoment entgegensetzt, i.e. kippstabil gelagert ist, kann ein Airbagmodul mit einer abgerundeten Vorderseite, die beispielsweise eine Oberflächenstruktur in Form eines Kugel-, Zylinder- oder Kegelteiles aufweist, leichter gekippt werden. Da zudem eine Vorderseite mit einer solchen Oberflächenstruktur nicht plan auf einer Ebene aufliegt und damit die Airbagaustrittsöffnung nicht hermetisch verschließt, kann der sich entfaltende Luftsack durch die Spalte zwischen einer solchen Vorderseite und der Ebene austreten und dabei das Gehäuse kippen. Eine nicht kippstabile Lagerung im Sinne der vorliegenden Erfindung ergibt sich insbesondere dann, wenn bei Lagerung des Airbagmoduls mit seiner Vorderseite auf einer horizontalen Ebene die im Schwerpunkt des Airbagmoduls angreifende Gewichtskraft nicht durch den Flächenmittelpunkt der auf die horizontalen Ebene projektierten Vorderseite verläuft.

Die Oberflächenstruktur weist eine Berührebene auf, i. e. die Ebene aller Punkte der Vorderseite, die bei deren Auflage auf einer Ebene diese Ebene berühren. Bevorzugt ist diese Berührebene gegen die Ebene, in der die Airbagaustrittsöffnung liegt, um einen Winkel geneigt. Dieser Winkel kann bevorzugt zwischen 5° und 45° betragen. Wird ein solches Airbagmodul auf eine horizontale Ebene gelegt, ist es gegenüber dieser um diesen Winkel geneigt, so dass ein Impuls des sich durch die Airbagaustrittsöffnung entfaltenden Luftsackes nicht senkrecht auf die horizontale Ebene trifft, sondern schräg, wodurch das Airbagmodul gekippt wird.

Erfindungsgemäß sind auf der Vorderseite des Gehäuses ein oder mehrere Vorsprünge ausgebildet. Diese Vorsprünge können beispielsweise stift-, bügel- oder fächerförmig ausgebildet sein. Sie können sich auch rippenförmig über einen Teil oder die gesamte Länge der Vorderseite erstrecken. Gleichermaßen können Vorsprünge auch breitflächig ausgebildet sein. Alle Vorsprünge können die gleiche Form aufweisen. Gleichermaßen ist es jedoch auch möglich, Vorsprünge verschiedener Formen miteinander zu kombinieren.

Durch solche Vorsprünge ist die Schaffung von Spalten zwischen Vorderseite und einer Ebene, auf der das Airbagmodul gelagert ist, auf einfache Weise möglich, ohne die konstruktive Freiheit bei der Gestaltung des Gehäuses zu beeinträchtigen. Insbesondere kann durch solche Vorsprünge eine kippstabile Lagerung verhindert werden.

Ein oder mehrere, in einer Ausführung alle Vorsprünge sind lösbar an dem Gehäuse befestigt, beispielsweise verschraubt oder verrastet. Dadurch wird es möglich, das Airbagmodul mit befestigten Vorsprüngen zu lagern bzw. zu testen und dadurch die Gefahr einer Zerlegung des Gehäuses bei einer Zündung des Gasgenerators zu verhindern. Kurz vor der Montage in einem Kraftfahrzeug können die Vorsprünge dann gelöst werden, so dass sich wieder eine plane Auflage der Vorderseite beispielsweise an der Rückseite einer Armaturentafel oder dergleichen realisieren lässt.

Gleichermaßen können ein oder mehrere Vorsprünge auch umlösbar an dem Gehäuse befestigt, beispielsweise mit diesem verklebt oder verschweißt sein. Wird das Gehäuse urgeformt, beispielsweise gespritzt oder gegossen, können die Vorsprünge vorteilhaft einstückig mit dem Gehäuse ausgebildet werden. Dies verringert den Herstellungsaufwand und stellt sicher, dass die Vorderseite des Gehäuses nicht unbeabsichtigt plan auf einer Ebene gelagert werden kann

Insbesondere, wenn die Vorsprünge keine tragende Funktion ausüben, sondern lediglich eine plane Auflage der Vorderseite auf einer Ebene verhindern, können in einer bevorzugten Ausführung Durchbrüche in den Vorsprüngen vorgesehen sein, um deren Gewicht zu reduzieren und Material einzusparen.

Verbleiben die Vorsprünge auch bei Montage im Kraftfahrzeug an dem Gehäuse, weisen sie bevorzugt eine Kontur auf, die eine Aufnahme der Vorsprünge in entsprechenden Aussparungen in dem Kraftfahrzeug ermöglicht. Handelt es sich bei einem erfindungsgemäßen Airbagmodul beispielsweise um ein Fahrerairbagmodul, können die Vorsprünge so ausgestaltet sein, dass sie in Aussparungen in einem Lenkradtopf bzw. einer Lenkradabdeckung aufgenommen werden, wenn das Airbagmodul in einem Lenkrad montiert ist. Handelt es sich bei dem erfindungsgemäßen Airbagmodul um ein Beifahrer-Airbagmodul, können die Vorsprünge Aussparungen entsprechen, die auf einer dem Fahrgastraum abgewandten Rückseite einer Armaturentafel ausgebildet sind. Handelt es sich bei dem erfindungsgemäßen Airbagmodul um ein Seitenairbagmodul, können die Vorsprünge in Aussparungen aufgenommen werden, die in einer Türverkleidung, einer Verkleidung einer A-, B- oder C-Säule oder einem Dachhimmel ausgebildet sind. Hierdurch ergibt sich jeweils eine besonders platzsparende Montage des Airbagmoduls. Zugleich können die Vorsprünge als Montagehilfe dienen und das Airbagmodul in seiner Montagelage festlegen.

Die Vorsprünge können bevorzugt auch als Leitflügel für den sich entfaltenden Luftsack dienen. Der Luftsack entfaltet sich durch die Airbagaustrittsöffnung in einer durch seinen Schnitt, den Gaseintritt und dergleichen vorgegeben Weise. Sind auf der Vorderseite, in der die Airbagaustrittsöffnung ausgebildet ist, Vorsprünge angeordnet, mit denen der sich entfaltende Luftsack in Berührung kommt, kann durch gezielte Platzierung und Gestaltung der Vorsprünge die Entfaltungscharakteristik des Luftsackes mitgesteuert werden. Beispielsweise kann durch einen Vorsprung eine Abschattung eines hinter diesem Vorsprung liegenden Bereiches gegenüber dem sich entfaltenden Luftsack definiert werden.

Bevorzugt kann die Airbagaustrittsöffnung durch eine Verkleidung verschlossen sein, die sich durch den entfaltenden Luftsack öffnet. Diese Verkleidung kann beispielsweise Sollbruchstellen aufweisen, die durch Perforation oder Materialverdünnung ausgebildet sind und zerstörend geöffnet werden. Gleichermaßen kann die Verkleidung eine oder mehrere Klappen aufweisen, die von dem in sich entfaltenden Luftsack aufgestoßen werden.

Wie vorstehend ausgeführt, erhöht die Gefahr eines auf einer der Vorderseite gegenüberliegenden Rückseite des Gehäuses angeordneten schweren Gasgenerators die Gefahr, dass ein plan auf einer Ebene aufliegendes Airbagmodul sich unter Wärmeeinwirkung zerlegt, da der durch den gezündeten Treibstoff im hermetisch abgeschlossenen Gehäuseinneren erzeugte Druck sich aufgrund der Massenträgheit, die einem Abheben des Gehäuses von der Ebene und damit einem Freigeben der Airbagaustrittsöffnung entgegenwirkt, zu rasch erhöht. Bei einem erfindungsgemäßen Airbagmodul kann hingegen der Gasgenerator auf einer der Vorderseite gegenüberliegenden Seite des Gehäuses angeordnet werden, was die Gestaltungsfreiheit des Airbagmoduls erhöht. Vorteilhafterweise ist der Gasgenerator dabei außerzentrisch bezüglich der Airbagaustrittsöffnung und/oder der Vorderseite angeordnet, so dass sich auch aufgrund der Gewichtsverteilung eine nicht kippstabile Lagerung ergibt.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: ein Airbagmodul nach einem ersten Ausführungsbeispiel, dass das Verständnis der Erfindung erleichtert in einer Seitenansicht;
- Fig. 2: ein Airbagmodul nach einem zweiten Ausführungsbeispiel, dass das Verständnis der Erfindung erleichtert in einer Seitenansicht;
- Fig. 3: ein Airbagmodul nach einem dritten Ausführungsbeispiel, dass das Verständnis der Erfindung erleichtert in einer Seitenansicht; und
- Fig. 4: ein Airbagmodul nach einer Ausführung der vorliegenden Erfindung in einer Seitenansicht.

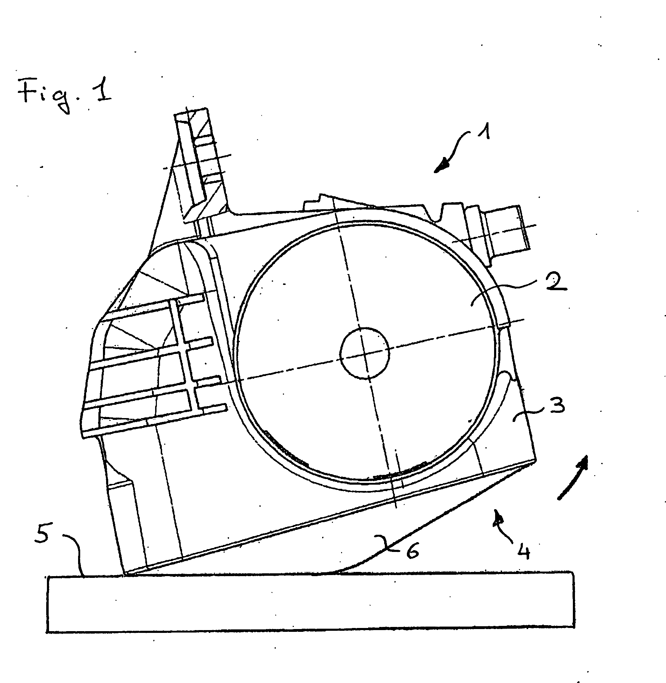

Fig. 1 zeigt ein Airbagmodul 1 nach einem ersten Ausführungsbeispiel, dass das Verständnis der Erfindung erleichtert. Es umfasst ein als Kunststoff-Urformteil hergestelltes Gehäuse 3 und einen in dem Gehäuse 3 aufgenommenen Gasgenerator 2 zum Befüllen eines ebenfalls im Gehäuse 3 aufgenommenen, im Ausgangszustand zusammengefalteten Luftsackes (nicht dargestellt).

Auf einer Vorderseite 4 weist das Gehäuse eine (nicht dargestellte) im Wesentlichen rechteckförmige Airbagaustrittsöffnung auf, die durch eine dünne Membran (nicht dargestellt) verschlossen ist. Bei Zündung des Gasgenerators 2, der Gassatztabletten (nicht dargestellt) enthält, befüllt dieser den Luftsack mit einem rasch expandierendem Gas, so dass sich der ursprünglich zusammengefaltete Luftsack entfaltet, dabei durch die Airbagaustrittsöffnung austritt und die Membran längs durch Materialverdünnung vorgegebenen Sollbruchstellen aufreißt.

Auf seiner Vorderseite 4 weist das Gehäuse 3 zwei seitlich neben der Airbagaustrittsöffnung angeordnete rippenförmige Vorsprünge 6 auf, die in der Seitansicht im Wesentlichen die Kontur eines flachen, abgerundeten Dreieckes aufweisen, dessen Grundfläche sich über die gesamte Vorderseite 4 erstreckt, und von denen in Fig.1 nur einer sichtbar ist.

Wird das Airbagmodul 1 nach dem ersten Ausführungsbeispiel , wie in Fig. 1 dargestellt, mit seiner Vorderseite 4 auf einer horizontalen Ebene 5, beispielsweise einem Lagerregal oder einer Testfläche für eine Feuerprüfung gelagert, führen die Vorsprünge 6 zu einem Verkippen des Airbagmoduls, so dass auf einer Seite (rechts in Fig.1) ein dreieckförmiger Spalt zwischen der Vorderseite 4 und der horizontalen Ebene 5 entsteht. Damit ergibt sich eine nicht kippstabile Lagerung des Airbagmoduls 1 auf der horizontalen Ebene 5, da das Airbagmodul 1 gegenüber der horizontalen Ebene 5 bereits leicht gekippt ist und damit einem weiteren Kippen nur verhältnismäßig geringen Widerstand entgegensetzt.

Wird das Airbagmodul 1 nach dem ersten Ausführungsbeispiel in der in Fig. 1 dargestellten Position unbeabsichtigt, beispielsweise während der Lagerung, oder vorsätzlich, beispielsweise im Rahmen einer Feuerprüfung, einem Feuer ausgesetzt, entzünden sich die Gassatztabletten des Gasgenerators 2 und befüllen den Luftsack. Dieser tritt durch die Airbagaustrittsöffnung, die im Bereich der dreieckförmigen Spalte (rechts in Fig.1) nicht durch die horizontale Ebene 5 verschlossen ist, aus und entfaltet sich in diesem Spalt hinein. Dadurch wird ein Teil des durch den Gasgenerator 2 erzeugten Druckes bereits abgebaut.

Durch den sich im Spalt zwischen Vorderseite 4 und Ebene 5 entfaltenden Luftsack wird das Airbagmodul 1 in der in Fig. 1 durch einen Pfeil angedeuteten Richtung weiter gekippt, so dass die Airbagaustrittsöffnung in der Vorderseite 4 in eine im Wesentlichen zur Ebene 5 senkrechte, freie Stellung gelangt, durch die sich der Luftsack im Wesentlichen ungehindert weiter entfalten kann.

Durch die aufgrund der dreieckförmigen Vorsprünge 6 gegenüber der horizontalen Ebene 5 geneigte Schussrichtung des Airbagmoduls 1 trifft der sich entfaltende Luftsack unter einem schrägen Winkel auf die Ebene 5 und verstärkt so vorteilhaft die Kippbewegung.

All dies verringert die Gefahr, dass ein auf seiner Vorderseite 4 gelagertes Airbagmodul 1 in Folge einer Zündung seines Gasgenerators 2 zerlegt wird.

Tritt der sich entfaltende Luftsack aus der Airbagaustrittsöffnung aus, berührt er dabei von innen die beiden seitlichen Vorsprünge 6. Diese schatten dadurch von der Airbagaustrittsöffnung abgewandte Bereiche seitlich neben den Vorsprüngen gegen den sich entfaltenden Luftsack ab und wirken somit als Leitflügel, die Entfaltungscharakteristik des Luftsackes mit vorgeben.

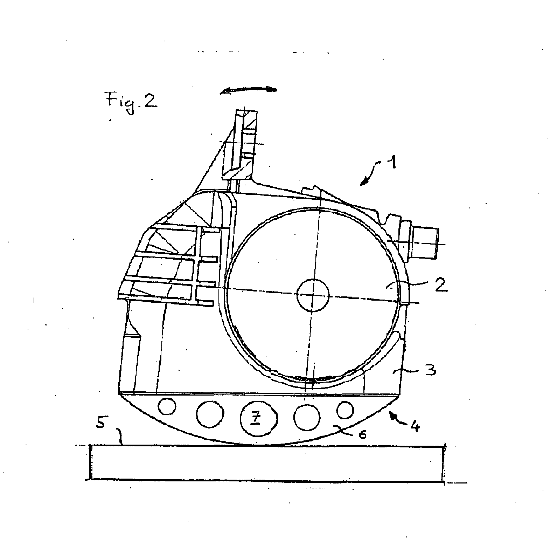

Fig. 2 zeigt in Fig. 1 entsprechender Darstellung ein Airbagmodul 1 nach einem zweiten Ausführungsbeispiel. Dabei sind gleiche Elemente mit identischen Bezugszeichen versehen, so dass auf deren Beschreibung verzichtet und nachfolgend nur auf die Unterschiede zum ersten Ausführungsbeispiel eingegangen wird.

Die beiden seitlich angeordneten, rippenartigen Vorsprünge 6 sind in der zweiten Ausführungsform im Wesentlichen kreissegmentförmig ausgebildet. Damit ergeben sich auf beiden Seiten (links und rechts in Fig.2) Spalte zwischen der Vorderseite 4 und der horizontalen Ebene 5, durch die sich der Luftsack entfalten und dabei das Airbagmodul in einer durch den Doppelpfeil angedeuteten Richtung kippen kann. Aufgrund der abgerundeten Kontur der Vorderseite 4 kann das Airbagmodul 1 dabei leicht gekippt werden, i.e. ist nicht kippstabil gelagert. Ob das Airbagmodul 1 gemäß dem zweiten Ausführungsbeispiel dabei in oder gegen den Uhrzeigersinn kippt, hängt beispielsweise von der Schussrichtung des Luftsackes, der Gewichtsverteilung des Airbagmoduls 1 und dergleichen ab.

Die beiden seitlichen, kreissegmentförmigen Vorsprünge 6 weisen in der zweiten Ausführungsform Durchbrüche 7 auf, um Material und Gewicht einzusparen.

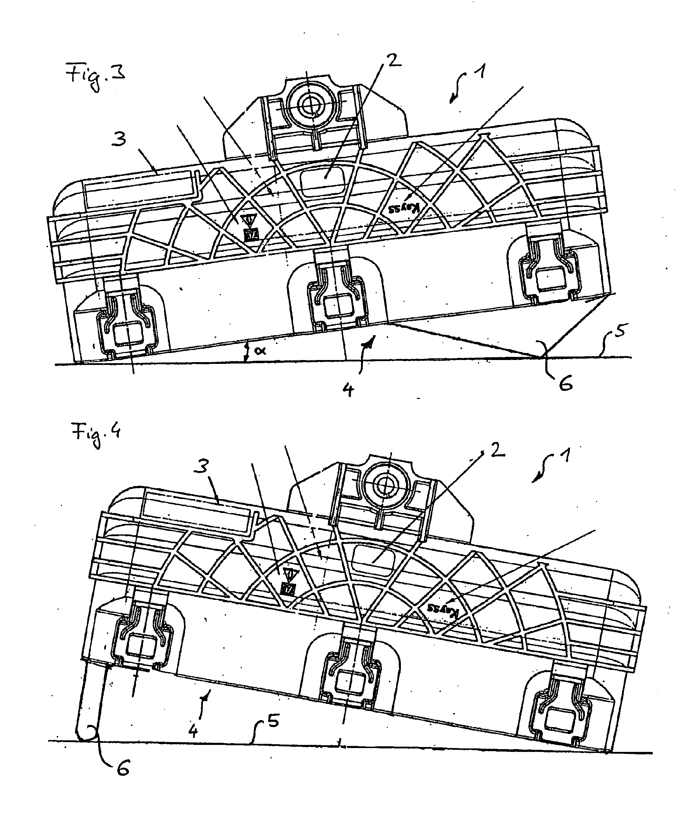

Fig. 3 zeigt in Fig. 1, 2 entsprechender Darstellung ein Airbagmodul 1 nach einem dritten Ausführungsbeispiel. Dabei sind gleiche Elemente wieder mit identischen Bezugszeichen versehen, so dass auf deren Beschreibung verzichtet und nachfolgend nur auf die Unterschiede zum ersten und zweiten Ausführungsbeispiel eingegangen wird.

Bei dem Airbagmodul nach dem dritten Ausführungsbeispiel erstrecken sich die seitlichen, rippenartigen und in der Seitansicht dreieckförmigen Vorsprünge 6 nicht über die gesamte Vorderseite 4, sondern sind nur auf einer Seite (rechts in Fig. 3) ausgebildet. Liegt das Airbagmodul 1 nach dem dritten Ausführungsbeispiel mit seiner Vorderseite 4 auf der horizontalen Ebene 5 auf, so berühren nur die Kante des Vorderseitenbereichs, in dem keine Vorsprünge ausgebildet sind (links in Fig. 3) und die Spitzen der pyramidenförmigen Vorsprünge 6 die horizontale Ebene 5. Die durch diese Kante und Spitzen definierte Berührebene der Oberflächenstruktur des Airbagmoduls 1 weist gegenüber der Ebene, in der die Airbagaustrittsöffnung liegt, einen Winkel α von 5° auf, so dass das Airbagmodul 1 gegenüber der horizontalen Ebene 5 bei Lagerung auf seiner Vorderseite 4 eine gegen die Gravitationsrichtung bzw. die horizontale Ebene 5 geneigte Schussrichtung aufweist. Wird der Gasgenerator gezündet, tritt der sich entfaltende Luftsack vor und zwischen den seitlich angeordneten Vorsprüngen 6 aus und kippt dabei das Airbagmodul 1 in mathematisch positiver Richtung.

Fig. 4 zeigt in Fig. 1-3 entsprechender Darstellung ein Airbagmodul 1 nach einer Ausführung der vorliegenden Erfindung. Dabei sind gleiche Elemente ebenfalls mit identischen Bezugszeichen versehen, so dass auf deren Beschreibung verzichtet und nachfolgend nur auf die Unterschiede zur bis dritten Ausführung eingegangen wird.

Bei der Ausführung der Fig. 4 wird die plane Auflage der Airbagaustrittsöffnung auf der Ebene 5 durch an einer Seite der Vorderseite 4 (links in Fig. 4) aufgesteckte, stiftförmige Vorsprünge 6 verhindert. Während der Lagerung oder auch bei einer Feuerprüfung kippt der sich aufgrund einer Zündung des Gasgenerators 2 entfaltende Luftsack das auf seiner Vorderseite 4 auf der horizontalen Ebene 5 gelagerte Airbagmodul 1 im Uhrzeigersinn und kann sich somit rasch außerhalb des Gehäuses 3 entfalten. Hierdurch wird die Gefahr einer Zerlegung des Gehäuses 3 reduziert.

Zur Montage an einer planen Rückseite einer Armaturentafel (nicht dargestellt) werden die aufgesteckten Vorsprünge 6 entfernt und das Airbagmodul 1 in bekannter Weise an der Armaturentafel befestigt, beispielsweise verschraubt. Die Gefahr einer Zerlegung des Gehäuses 3 ist in diesem Montagezustand bereits dadurch verringert, dass bei einer Zündung des Gasgenerators 2 der sich entfaltende Luftsack durch die Airbagaustrittsöffnung und eine entsprechende Öffnung in der Armaturentafel austreten kann.

Insbesondere bei der Ausführung der Fig. 4 ergibt sich aufgrund der mit Vorsprüngen 6 ausgebildeten Oberflächenstruktur der Vorderseite 4 eine nicht kippstabile Lagerung, da bei der in Fig. 4 Lagerung des Airbagmoduls 1 mit seiner Vorderseite 4 auf der horizontalen Ebene 5 die im Schwerpunkt des Airbagmoduls angreifende Gewichtskraft nicht durch den Flächenmittelpunkt der auf die horizontalen Ebene projektierten Vorderseite verläuft.

**Bezugszeichenliste**

| | |
|---|---|
| 1 | Airbagmodul |
| 2 | Gasgenerator |
| 3 | Gehäuse |
| 4 | Vorderseite |
| 5 | Ebene |
| 6 | Vorsprung |
| 7 | Durchbruch |
| α | Winkel zwischen Berühr- und Airbagaustrittsebene |

## Patentansprüche

1. Verfahren zur Handhabung eines Airbagmoduls (1) mit einem Luftsack, einem Gasgenerator (2) zum Befüllen des Luftsackes und einem Gehäuse (3) zur Aufnahme des Luftsackes im nicht befüllten Zustand, das eine Vorderseite (4) aufweist, in der eine Airbagaustrittsöffnung ausgebildet ist,
**dadurch gekennzeichnet, dass**
die Vorderseite (4) des Gehäuses (3) mindestens einen lösbar mit dieser verbundenen Vorsprung (6) aufweist;
das Airbagmodul (1) auf einer Ebene (5) gelagert wird, wobei die Vorderseite (4) des Gehäuses (3) dieser Ebene (5) zugewandt ist; und
der mindestens eine Vorsprung (6) zeitnah vor der Befestigung des Airbagmoduls (1) in einem Kraftfahrzeug von dem Gehäuse (3) entfernt wird; und
das Airbagmodul (1) mit seiner Vorderseite (4), insbesondere an einer Rückseite einer Armaturentafel eines Kraftfahrzeuges, montiert wird.

2. Verfahren nach Anspruch 1, **dadurch gekennzeichnet, dass** das Airbagmodul (1) auf der Ebene (5) nicht kippstabil gelagert wird.

3. Airbagmodul (1), insbesondere zur Durchführung des Verfahrens nach Anspruch 1 oder 2, mit einem Luftsack, einem Gasgenerator (2) zum Befüllen des Luftsackes, und einem Gehäuse (3) zur Aufnahme des Luftsackes im nicht befüllten Zustand, das eine Vorderseite (4) aufweist, in der eine Airbagaustrittsöffnung ausgebildet ist;
**dadurch gekennzeichnet, dass**
die Vorderseite (4) des Gehäuses (3) mindestens einen lösbar mit dieser verbundenen Vorsprung (6) aufweist, der vor der Befestigung des Airbagmoduls (1) in einem Kraftfahrzeug von dem Gehäuse (3) entfern wird.

4. Airbagmodul (1) nach Anspruch 3, **dadurch gekennzeichnet, dass** der mindestens eine Vorsprung (6) stift-, bügel-, fächer-, rippenförmig oder breitflächig ausgebildet ist.

5. Airbagmodul (1) nach Anspruch 3 oder 4-, **dadurch gekennzeichnet, dass** der mindestens eine Vorsprung (6) einen oder mehrere Durchbrüche (7), aufweist.

6. Airbagmodul (1) nach einem der Ansprüche 3 bis 5-, **dadurch gekennzeichnet, dass** der mindestens eine Vorsprung (6) als Leitflügel für den sich entfaltenden Luftsack ausgebildet ist.

7. Airbagmodul (1) nach einem der Ansprüche 3 bis 6, **dadurch gekennzeichnet, dass** die Airbagaustrittsöffnung eine durch den sich entfaltenden Luftsack öffenbare Verkleidung aufweist.

8. Airbagmodul (1) nach einem der Ansprüche 3 bis 7, **dadurch gekennzeichnet, dass** der Gasgenerator auf einer der Vorderseite (4) gegenüber liegenden Seite des Gehäuses (3) angeordnet ist.

## Claims

1. A method for handling an airbag module (1), comprising an airbag, a gas generator (2) for filling the airbag, and a housing (3) for accommodating the airbag in the unfilled state, having a front side (4) in which an airbag outlet opening is arranged, **characterized in that** the front side (4) of the housing (3) comprises at least one projection (6) which is detachably connected thereto,
the airbag module (1) is mounted in one plane (5), wherein the front side (4) of the housing (3) faces said plane (5), and
the at least one projection (6) is removed from the housing (3) shortly before the fixing of the airbag module (1) in a motor vehicle, and
the airbag module (1) is mounted with its front side (4), especially to a rear side of a dashboard of a motor vehicle.

2. A method according to claim 1, **characterized in that** the airbag module (1) is mounted in the plane (5) in a manner not resistant to tilting.

3. An airbag module (1), especially for carrying out the method according to claim 1 or 2, comprising an airbag, a gas generator (2) for filling the airbag, and a housing (3) for accommodating the airbag in the non-filled state, having a front side (4) in which an airbag outlet opening is formed, **characterized in that** the front side (4) of the housing (3) comprises at least one projection (6) which is detachably connected thereto and which is removed from the housing (3) prior to the fixing of the airbag module (1) in a motor vehicle.

4. An airbag module (1) according to claim 3, **characterized in that** the at least one projection (6) is arranged in the manner of a pin, bracket, fan, rib or over a wide area.

5. An airbag module (1) according to claim 3 or 4, **characterized in that** the at least one projection (6) comprises one or several breakthroughs (7).

6. An airbag module (1) according to one of the claims 3 to 5, **characterized in that** the at least one projection (6) is arranged as a deflector blade for the unfolding airbag.

7. An airbag module (1) according to one of the claims 3 to 6, **characterized in that** the airbag outlet opening comprises a casing which can be opened by the unfolding airbag.

8. An airbag module (1) according to one of the claims 3 to 7, **characterized in that** the gas generator is arranged on a side of the housing (3) opposite of the front side (4).

## Revendications

1. Procédé pour la manipulation d'un module de coussin gonflable de sécurité (1) avec un sac gonflable, un générateur de gaz (2) pour remplir le sac gonflable et un boîtier (3) pour recevoir le sac gonflable non rempli, qui présente une face avant (4) dans laquelle est formée une ouverture de sortie du coussin gonflable de sécurité, **caractérisé en ce que**
la face avant (4) du boîtier (3) présente au moins une saillie (6) reliée de façon amovible avec elle ;
le module de coussin gonflable de sécurité (1) est supporté sur un plan (5), la face avant (4) du boîtier (3) étant tournée vers ce plan (5) ; et
l'au moins une saillie (6) est enlevée du boîtier (3) peu de temps avant la fixation du module de coussin gonflable de sécurité (1) dans un véhicule à moteur ; et
le module de coussin gonflable de sécurité (1) est monté avec sa face avant (4), en particulier sur une face arrière d'un tableau de bord d'un véhicule à moteur.

2. Procédé selon la revendication 1, **caractérisé en ce que** le module de coussin gonflable de sécurité (1) n'est pas supporté sur le plan (5) d'une manière stable en basculement.

3. Module de coussin gonflable de sécurité (1), en particulier pour la mise en oeuvre du procédé selon la revendication 1 ou 2, avec un sac gonflable, un générateur de gaz (2) pour remplir le sac gonflable et un boîtier (3) pour recevoir le sac gonflable non rempli, qui présente une face avant (4) dans laquelle est formée une ouverture de sortie du coussin gonflable de sécurité, **caractérisé en ce que** la face avant (4) du boîtier (3) présente au moins une saillie (6) reliée de façon amovible avec elle, qui est enlevée du boîtier (3) peu de temps avant la fixation du module de coussin gonflable de sécurité (1) dans un véhicule à moteur.

4. Module de coussin gonflable de sécurité (1) selon la revendication 3, **caractérisé en ce que** l'au moins une saillie (6) est en forme de goupille, d'étrier, de palette, de nervure ou étendue sur une large surface.

5. Module de coussin gonflable de sécurité (1) selon la revendication 3 ou 4, **caractérisé en ce que** l'au moins une saillie (6) présente une ou plusieurs perforations (7).

6. Module de coussin gonflable de sécurité (1) selon l'une des revendications 3 à 5, **caractérisé en ce que** l'au moins une saillie (6) est conformée comme une ailette de guidage pour le sac gonflable en train de se déployer.

7. Module de coussin gonflable de sécurité (1) selon l'une des revendications 3 à 6, **caractérisé en ce que** l'ouverture de sortie du coussin gonflable de sécurité présente un habillage qui peut être ouvert par le sac gonflable en train de se déployer.

8. Module de coussin gonflable de sécurité (1) selon l'une des revendications 3 à 7, **caractérisé en ce que** le générateur de gaz est disposé sur une face du boîtier (3) faisant face à la face avant (4).
